(19) **Europäisches Patentamt**

**European Patent Office**

**Office européen des brevets**

(11) **EP 1 530 998 A2**

(12) **EUROPEAN PATENT APPLICATION**

(43) Date of publication:
**18.05.2005 Bulletin 2005/20**

(51) Int Cl.⁷: **B01J 20/24**, B01J 20/16,
B01J 20/18, B65D 81/26

(21) Application number: **04105815.7**

(22) Date of filing: **16.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | (72) Inventors:<br>• **Di Matteo, Marisa**<br>  **80055 Portici (NA) (IT)**<br>• **Albanese, Donatella**<br>  **80055 Portici (NA) (IT)**<br>• **Crescitelli, Alessio**<br>  **80055 Portici (NA) (IT)** |
| (30) Priority: **17.11.2003 IT SA20030021** | |
| (71) Applicant: **Universita' Degli Studi di Salerno**<br>**84084 Fisciano (SA) (IT)** | (74) Representative: **Bazzichelli, Alfredo**<br>**c/o Società Italiana Brevetti S.p.A.**<br>**Piazza di Pietra, 39**<br>**00186 Roma (IT)** |

(54) **Adsorbent for lengthening the shelf life of food products**

(57) The present invention relates an absorbent product able to lengthen the preservation period of food products, by optimizing at the same time the maintenance of the sensorial parameters, period designated hereinafter as *shelf life*. The adsorbent product includes cellulose, zeolites and starch and it is used in adsorbent/ food product ratio of 0.5 - 5 % in weight.

EP 1 530 998 A2

**Description**

The present invention relates to an adsorbent product comprising cellulose, zeolites and starch able to lengthen the preservation period of food products, by optimizing at the same time the maintenance of the sensorial parameters, preservation period which is designated hereinafter as *shelf life.* The product can be used both in the preservation of fresh food products, such as fresh vegetables, meat and fish, defrost, whole products and products with IV gamma (those products which are poorly treated, washed, decorticated, cut and put-into-bags vegetables are so designated) and in the preservation of dried and oven products.

State of art

The preservation of food products involves several difficulties due to the quick deterioration in the hygienical, nutritional and sensorial qualities.

In case of vegetables, the main deterioration causes are the respiration with production of heat, water, carbon dioxide and metabolites, such as ethylene, and the transpiration with loss in humidity and catabolic-type phenomena. In recent years, a great expansion of the food market towards the poorly-treated packed vegetable products has occurred; this has made the development of techniques able to lengthen the shelf life of food products still more important. Lengthening the commercial life of a vegetable product involves the possibility of slowing down the respiratory activity and, consequently, the main metabolic phenomena connected thereto which cause the loss in the freshness properties and, at the same time, controlling the humidity level.

For some meat products (including the fish products), the deterioration causes are mainly due to microbic and enzymatic attacks. In particular, for food products such as fish and derivatives the degrading effects provoke production of amines with low molecular weight, unpleasant smells, softening of meats due to the protein degradation and chromatic variations. The huge increase in the consumption of fish products in recent years has been an incentive to face the problem of safeguarding the product both from agents of outer contamination and from damages of physical type which, apart from accelerating the deterioration processes, cause the depreciation of the commercial value of the food product. The proposed solutions have involved pretreatments with antimicrobic and antioxidant substances and vacuum-packagings and/or packagings in protective atmosphere (MAP technology/Packaging in Protective Atmosphere).

As far as the meat products are concerned, among the qualitative parameters which lead to choose and purchase this category of products, the red colour (due to oxygenation of the deoxymyoglobin to oxymyoglobin after exposition of the product to oxygen) is no doubt the most important factor. Therefore, the maintenance of the pigment oxygenated form during the marketing and the preservation of the meat products is one of the main objective of the field. Even in case of these products there was the need for means for lengthening the *shelf life.*

Currently, one tries to lengthen the shelf life of fresh meat by using protective atmospheres rich in oxygen which vary from 40 to 80% of utilized O2 in order to slow down the phenomena of getting dark and loosing the colour caused by the transformation of the oxymyoglobin (muscle pigment) into the metamyoglobin oxydized form. The application of the MAP technique not always produces encouraging results, in particular for the colour which tends to get dark.

The main feature of oven products and of dried products is the low $a_w$ (water activity). The main deterioration causes for this type of food products can be then ascribed to the absorption of the environmental humidity which, apart from causing the loss in the main sensorial features of the product, make degrading phenomena with microbic origin to start and favour alterations of existing fat substance.

The solutions proposed in the state of art to the problem of lengthening the *shelf life* of food products, substantially use of packings and protective atmospheres, have not been considered adequate and, therefore, the need for disposing of improved means was felt which would be able to maintain the quality and the organolectic features of fresh products and/or oven products even after a prolonged period of time, possibly after long transportation.

Now, it has been found that it is possible improving the preservation of fresh products and/or oven products by acting on the preservation atmosphere by using an adsorbent product, containing cellulose, zeolites and starch.

Therefore, an object of the present invention is an adsorbent product for lengthening the *shelf life* of packed food products, which can be obtained by the process comprising the following procedures:

    a. preparing a mixture of cellulose, zeolites and starch
    b. mixing of said mixture with water until obtaining a dough
    c. drying and formation of said dough.

**EP 1 530 998 A2**

BRIEF DESCRIPTION OF THE DRAWINGS

9 figures are enclosed to the present description which represent:

figure 1 the aerobic and anaerobic phychrophilic charge measured onto samples of cuttle-fishes packed according to example 1;
figure 2 the variation of the trimethylamine concentration in the samples of example 1;
figure 3 the variation of the hue angle on asparagus samples described in example 2;
figures 4, 5 and 6, respectively, the variation in the chlorophyll content and the variation of the toughness and deflection parameter in the asparagus samples of example 2;
figures 7, 8 and 9 the effect of the packaging on pH, on a* parameter and on the hue angle in case of products with the packaging according to what described in example 3.

The adsorbent includes cellulose in a quantity of 40-85%, zeolites in a quantity of 2-30% and starch in a quantity from 0.1% to the quantity complementary to 100%, said quantities being expressed as weight quantity with reference to the total weight of the mixture. In a variant of the invention the adsorbent also comprises kaolin and/or gum in a weight percentage of 0.1-0.3%, with reference to the total weight of the adsorbent.
The cellulose used in the production of the adsorbent according to the present invention is preferably a mixture of cellulose with long fibres and microcrystalline cellulose with a ratio from 70 to 30% until 50 to 50%, in a particularly preferred way from 60 to 40%.
The utilized zeolites are preferably present as a mixture of zeolites 3A and 4A in a ratio between 80 and 20% and 60 and 40%, preferably between 70 and 30%. The used starch, the function thereof is making the mixture more compact, is preferably rice starch and it is used in a quantity from 0.1% to the complement to 100% of the other two used compounds.
For lengthening the shelf life of packed fresh vegetables an adsorbent is advantageously used, wherein the cellulose is present in a quantity of 40-70% and the zeolites in a quantity of 10-30%. For lengthening the *shelf life* of meat and fish an adsorbent is advantageously used wherein the cellulose is present in a quantity of 60-70% and the zeolites in a quantity of 10-30%. For lengthening the *shelf life* of oven products an adsorbent is advantageously utilized wherein the cellulose is present in a quantity of 70-85% and the zeolites in a quantity of 2-10%.
The adsorbent according to the present invention is preferably used in a 0.5-5% weight ratio with reference to the weight of the food product the shelf life of which has to be lengthened.
The adsorbent can be produced according to the process - which is also an object of the invention - comprising the following steps:

a. preparing a mixture of cellulose, zeolites and starch
b. mixing of said mixture with water until obtaining a dough
c. drying and formation of said dough.

In step b) the mixture obtained from the procedure a) is mixed with a water quantity in a ratio of 1 mixture part by 1.5 - 2.5 parts of water, preferably in a ratio of 1:2. Step c) is carried out at temperatures between 60 and 80°C, preferably 70°C until complete drying of the adsorbent. As said, to the mixture of step a), it is possible adding also kaolin and/o gum in a weight percentage of 0.1-0.3%, with reference to the mixture total weight which will be then mixed with water.
The obtained anhydrous adsorbent does not require to be activated before use.
Advantageously, and this is an object of the present invention too, the adsorbent is used not in direct contact with the food product to be preserved, but it is placed inside a packaging which also provides an outer packing. In case of fresh vegetable products it is preferred using the adsorbent inside a packing of the semipermeable type, for example a small polystyrene basin and a polyethylenic film, thus implementing a packaging which is also an object of the present invention. In case of meat and fish products and in the oven products it is preferred using the adsorbent inside a barrier packing, for example constituted by coupled plastic films with very low permeability to water and to the main atmospheric gases, by implementing an additional packaging which is also an object of the present invention. An additional embodiment of the invention, in case of fish, meat and oven products, provides a packaging inside which, in addition to the adsorbent and to the barrier packing, a protective atmosphere is produced. Examples of such atmospheres are the atmospheres constituted by $O_2$, $N_2$, $CO_2$ alone or in mixture.
The adsorbent can be modelled in variable sizes according to the packing to be used and to the type and quantity of the food product to be preserved.

3

Examples

Hereinafter some examples illustrating the invention are reported.

Example 1

In the example an adsorbent according to the present invention (70% cellulose, 20% zeolites, 10% starch, hereinafter adsorbent 1) was utilized able to limit the off-flavour phenomena specific of the fish products and to further slow down the degrading phenomena which take place during preservation. In the example the adsorbent was used to lengthen the *shelf life* of cuttle-fishes as these fish are considered easily perishable. The samples used for the tests belonged to a single lot and were purchased directly from the fishing-boats at the port of Torre del Greco (NA) in order to have samples which had been fished for few hours. For the packaging, a barrier film-like packing was used constituted by a small basin in barriered polystyrene and coupled plastic films with very low permeability to water and to the main atmospheric gases to avoid the gaseous exchanges between the microatmosphere of the packagings and the outer environment.

For the test a small basin made of barrier foam polystyrene containing the adsorbent not in direct contact with the fished product was used. The small basin had at the bottom two groovings (5.4-cm wide, 10-cm long and 1.5-cm deep) for housing the cut-to-length adsorbent. The two groovings of the small basin were closed by holed grids of the same material of the small basins to avoid the contact with the material to be preserved. Such condition creates a head space inside the small basin which facilitates the adsorbing action with respect to possible off-flavours and liquids which originate during preservation. The utilized gaseous mixture contained $N_2$/80% and $CO_2$/20%

The main freshness indicators of the fish species taken into consideration were monitored by stocking the packagings in a refrigerating room at 2°C. The example reports the results of the comparison between the organolectic parameters of the fish products preserved i) with the traditional preservation method (fish product in contact with air, as control) ii) with the packaging with the protective atmosphere (80% $N_2$, 20% $CO_2$) and a film-like barrier packing and iii) with the packaging of item ii) with the addition of adsorbent product according to the present invention (in a 4% quantity with reference to the weight of the fished product). In this example the adsorbent product according to the invention was contained into a small basin made of gas-barriered foam polystyrene and it was not in contact with the fish products to be preserved.

Before the preservation and the packing the samples of the fished products of the two series were eviscerated and washed with running water in order to eliminate blood and organic liquids.

During the preservation, for the three series of samples i), ii) and iii), the main freshness indicators of the fished product were monitored by means of different analyses such as: chemical-physical analyses (pH, Trimethylamine and volatile basic total Nitrogen) and microbiological analyses (aerobical and anaerobical psychrotrophic total bacterical charge). The analyses were carried out by following methods which are officially recognized or known in the scientific field.

Chemical-physical analyses

The determination of the Volatile Basic Total Nitrogen (ATBV) was performed according to the Official Method of the European Union-1991, by using a Cat Mod.620 ultraturrex for the homogenization and a BUCHI Mod. 320 apparatus for the digestion and distillation. The TMA Trimethyilamine was determined according to the Analysis official method of AOAC 971.14 1995.

Microbiological analyses

As to the microbiological analyses, the samples were taken under aseptic conditions and transferred into aseptic bags for Stomacher apparatus (Pbi International) with addition of the Ringer solution (OXOID SP A) in the ratio 1: IO p/p, then they were homogenized into a Stomacher 400 Pbi International for 2 minutes and analysed after having performed scalar dilutions 1: 10 with sterile Ringer solution.

For each dilution the following parameters were sought for:

Aerobic total psychrophilic charge: method by application onto Plate Count Agar plate (Oxoid SPA) incubation temperature 7°C x IOg

Anaerobic total psychrophilic charge: method by application onto Plate Count Agar plate (Oxoid SP A), incubation in anaerobiosis chambers (Pbi) at the temperature of 7°C x 10g.

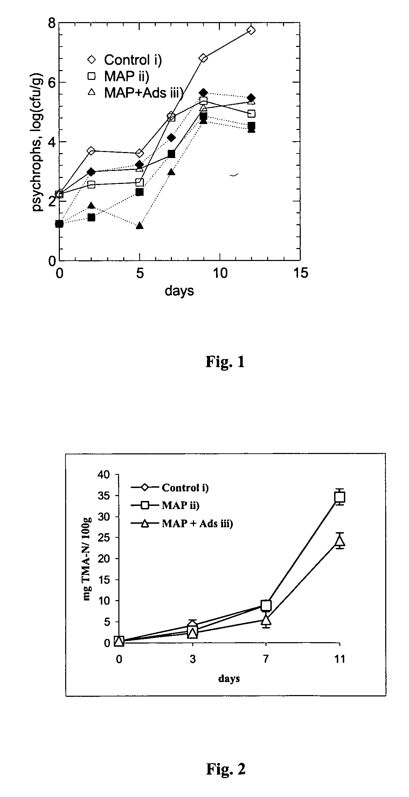

The results of the microbiological tests (figure 1) carried out during the preservation of samples i), ii) and iii) show an increase in the aerobical and anaerobical psychrophilic bacterial charge which in case of samples packed according to the traditional method (i) control) reaches levels equal to 7 logarithmic units *UFC/g,* after 7 days of preservation.

The values of the microbic charge, obtained both on samples ii) (protective atmosphere only) and on the ones containing also the active packing according to the invention (iii) adsorbent and protective atmosphere), show appreciable variations in the microbic concentration starting as from the 5th preservation day. A significative increase can be seen for both samples after 7 preservation days, but however the detected values do not exceed 6 logarithmic units, values which still show a high level of fish freshness. The data detected during the preservation period underline the adsorbent efficiency and give microbic concentrations lower both with respect to the control and with respect to item ii). The aerobic and anaerobic psychrophilic microbic charge was detected also onto the adsorbent alone obtaining, during the whole period of the experimentations, microbic charges below the detection limit and that is lower than 10UFC/g. The fish products, in particular the cephalopods to which the cuttle-fishes belong, during preservation release exudates: endogenous liquid enriched with nutritional nitrogenous substances easily assimilable by the microbic flora existing on the fish product. This causes that the microbic increase in the exudate, with relative production of secondary metabolics responsible for the off-flavours, is favoured and extremely rapid. The adsorbent, then, is able to capture the exudate and to neutralize the phenomenon described above.

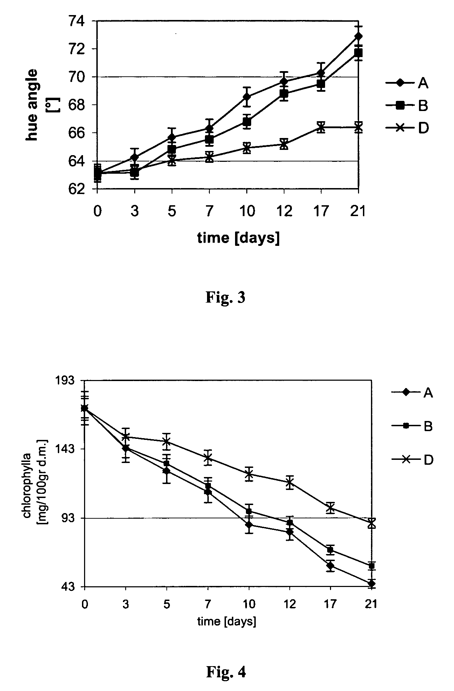

The variation observed for the trimethylamine (TMA) (figure 2) and for the Volatile Basic Total Nitrogen (ATBV) (following Table 1), which are the most used methods for evaluating the freshness state of the fish products, underlines, among the samples of cuttle-fishes in packagings according to the three compared methodologies, significative differences which evidence the adsorbent efficiency combined to the chosen protective atmosphere.

Table 1:

| Concentrations of the Volatile Basic Total Nitrogen detected onto samples of cuttle-fishes during preservation. | | | | | |
|---|---|---|---|---|---|
| ATBV- (mg/100g) | | | | | |
| days | Control i) | | MAP ii) | | MAP+Ads iii) | |
| 0 | 18.49±1.10 | a/x | 18.49±1.10 | a/x | 18.49±1.10 | a/x |
| 3 | 21.45±2.14 | b/x | 20.19±2.14 | a/x | 17.94±2.99 | a/x |
| 5 | 47.56±2.02 | c/x | 43.57±2.41 | b/x | 28.03±2.00 | b/y |
| 7 | 56.69±0.09 | d/x | 58.38±1.57 | c/xy | 61.64±2.56 | c/y |
| 11 | 158.28±0.04 | e/x | 133.23±3.47 | d/y | 112.67±4.23 | d/z |
| Different letters (a, b, c...) in the same column show significative differences (p< 0.05) | | | | | |
| Different letters (x, y, z) in the same column show significative differences (p< 0.05) | | | | | |

In fact, during the preservation period both the ATBV values and the TMA ones detected on the samples in packagings by using the adsorbent product of the present invention with protective atmosphere resulted to be lower compared to the ones obtained for the samples packed according to the classic method and for the ones packed with the protective atmosphere alone. In particular, the TMA-N/100g concentration found on the samples packed by using the adsorbent of the present invention in protective atmosphere was equal to 5.4 mg and 24.2 mg after 7 and 11 preservation days, significantly lower than 8 and 34 mg found, instead, in the samples of control cuttle-fishes and in the ones packed with the modified atmosphere alone. The same variation was found for the ATBV. The concentration of such parameter detected on the samples packed by combining the modified atmosphere and the adsorbent (item iii)) was significantly lowerer and it allowed detecting, for example after 5 and 11 preservation days, values equal to 28 and 112 mg ATBV/100g against 45 and 130-150 mg ATBV/100g detected with respect to the control samples (i) or ii) ) .

During preservation some sensorial analyses were carried out on samples of cuttle-fishes packed in MAP (ii) and containing the product of the invention (iii) and on samples as such (i).

The parameters taken into consideration were: the aroma of the raw product and the product taste after cooking in boiling water for 10 minutes. The judgement range was comprised between the values of 1 (extremely unpleasant odour and taste) and 9 (extremely pleasant odour and taste).

The tasters participating to the sensorial panel gave positive judgements for both parameters (taste and odour) of the samples of cuttle-fishes packed with the adsorbent according to the invention until 12 preservation days.

For the control samples (cuttle-fishes not packed i) and packed with the protective atmosphere alone, ii)) the evaluation borders on sufficiency already after 3 preservation days only.

In a way analogous to what described in the example 1, additional adsorbents with the following compositions were evaluated: adsorbent 2 (65% cellulose, 25% zeolites, 10% starch), adsorbent 3 (60% cellulose, 30% zeolites, 10% starch), adsorbent 4 (70% cellulose, 25% zeolites, 5% starch), adsorbent 5 (60% cellulose, 25% zeolites, 15% starch) and adsorbent 5bis (60% cellulose, 25% zeolites, 14.9% starch, 0.1% kaolin). The obtained results are in line with what reported in the example 1.

Example 2

The experimentation was carried out onto asparagus of the "Desto" cultivar. The samples were subjected to washing with cold water (6°C) to lower the temperature and to eliminate impurities. For the packaging a semi-permeable film was adopted, the features thereof are shown in table 2.

Table 2.

| Permeability of the semi-permeable film | | |
|---|---|---|
| CHARACTERISTIC | Measurement unit | Typical value |
| Transmission speed of water vapour | g/24 h*m2(38°C,100%UR) | 25 |
| Permeability to $O_2$ | Cm3/24h*m2*bar | 10,000 |
| Permeability to $CO_2$ | Cm3/24h*m2*bar | 41,000 |

The preservation was carried out in refrigerating room at 6°C and at 80 % of U.R.
The experimentation was carried out by comparing the following packaging methodologies:

A: as such (washed asparagus and preserved without treatment and without film);
B: as such + film (washed asparagus and packed with semipermeable film);
D: as such packed with semipermeable film and the adsorbent 5 (60% cellulose, 25% zeolites, 15% starch).

The lignification level was studied through the time evolution of the Toughness and Deflection parameters extrapolated from the tests of bending on three points (load cell of 50 N; speed of the transversed beam 50 mm/min.; the distance between the supports was fixed at 4 cm) with AMETEK LLOYD Instruments LRX plus dinamometer.

Colour

The colour measurements were carried out onto the asparagus' stems by using a Minolta Chroma Meter II Reflectance CR-200 (triple flash mode) three-stimulus colorimeter. Before any measurement the instrument was calibrated to a white-coloured standard briquette (L = 97,14; a = +0,09 and b = + 1,86).

Determination of the chlorophyll

For determining the chlorophyll a Perkin-Elmer lambda-Bio 40 spectrophotometer was used, with previous extraction onto 2 g sample of homogenized and centrifugated in 10 ml of 80% acetone. The spectrophotometric determination allows detecting at the same time both the chlorophyll a and chlorophyll b pigments. The readings were carried out at wavelengths of 663 nm and 645 nm. The absorbance of each solution was registered at these wavelengths, by using as white the 80% acetone solution and by using 3-ml quartz cuvettes.
For calculating the chlorophyll concentration the following equations were used [30]:

$$Chl\,a\left[\frac{mg}{g\,drysubs\tan ce}\right]=\frac{[(12.7\times Abs_{663})-(2.6\times Abs_{645})]\times ml\,Acetone}{mg\,drysubs\tan ce}$$

$$Chlb\left[\frac{mg}{g\,drysubs\tan ce}\right] = \frac{[(22.9 \times Abs_{645}) - (4.68 \times Abs_{663})] \times ml\,Acetone}{mg\,drysubs\tan ce}$$

The total chlorophyll is expressed by:

$$totalChl = Chl\,a + Chl\,b$$

The colorimetric analysis allowed monitoring the colour variations characterizing the asparagus' stems during preservation. In fact, a progressive loss in the brilliant green tone and a progressive sample yellowing is noted.

By means of the hue angle analysis (figure 3) one is able to quantify the possible sample yellowing, characterized by a hue angle value next to 90°.

From the carried out studies it can be deduced that in the A and B samples there is a great variation in the hue angle value, passing from about 63° to 72°, respectively. The efficiency of the D tested active packing is evident, therefor the colour degradation is minimum until the 21st preservation day.

The chlorophyll degradation is one of the phenomena characterizing the asparagus preservation.

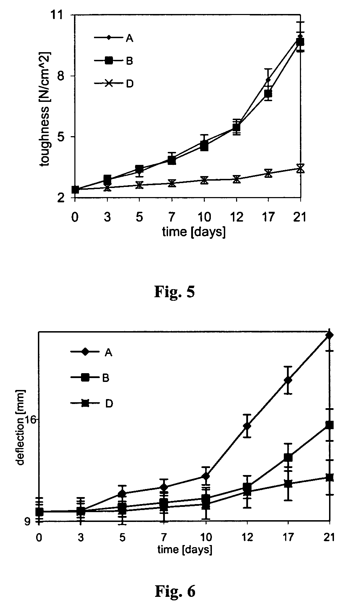

The degradation phenomenom, shown in figure 4, is very marked in the A and B sample; the group of samples with adsorbent shows a reduction in the chlorophyll content, which is much lower compared to the control and B group of samples.

The lignification phenomenon shows through the increase in thickness of the cell walls with cementation of the cellulosic fibres of the system of fibrovascular bundles and of the xylematic tissues, as well as the appearance of hardened nuclei among the fibres. The bending dinamometric tests, shown in figures 5 and 6, allowed evaluating the variation in time of two parameters strongly connected to the asparagus structural modifications: by evaluating the "toughness" parameter it is possible evaluating qualitatively the thickening level of the asparagus walls, which increase due to the lignification process; by evaluating the "deflection" parameter it is possible evaluating the loss in consistency and the structure softening caused by the water loss in the sample. The lignification seems strongly characterizing the sample as such. By using the active packing it is possible limiting such phenomenon by keeping the "toughness" parameter value almost constant until the 21st day. Analogous results were registered in the evaluation of the deflection parameter.

The asparagus are vegetable products characterized by rather short preservation time due to the high respiratory rate and to the stem lignification characterizing this vegetable class. The control samples (sample A) resulted, during the preservation period, in a quite rapid drop in the main monitored quality indicators. The use of the active packing (D) lengthened in an efficient way the preservation time of the IV gamma asparagus samples; the obtained results suggest a preservation time of 21 days.

The tests on the adsorbent efficiency for the "Desto" asparagus preservation were repeated by using adsorbents having the following compositions: adsorbent 6 (50% cellulose, 30% zeolites, 20% starch), adsorbent 7 (60% cellulose, 20% zeolites, 20% starch), adsorbent 8 (70% cellulose, 10% zeolites, 20% starch) and adsorbent 8bis (70% cellulose, 10% zeolites, 19.8% starch, 0.2% gums). The obtained results confirmed what reported with reference to the adsorbent 5 in the example 2. In fact, also with these adsorbents lengthenings of the product shelf-life, in line with the results obtained with the adsorbent 5, were obtained.

Example 3

The maintenance of the sensorial and qualitative features is no doubt the main factor during the distribution and sale of meat products. The adsorbent efficiency was tested on buffalo meat which was chosen as, due to its higher iron content, gets dark very quickly and its preservation results to be more problematic with respect to the bovine meat.

Sample preparation

The samples of buffalo meat were constituted by whole peaces of silverside weighing 3 - 4 Kg, with an ageing period of about 12 days in climatic cells at 2°C. The meat was sliced so as to obtain the same thickness for all the slices (0.8 cm). The small basins used in the different experimentations are made of polymeric material with high edges and sealed with barrier film, wherein the adsorbent was inserted.

The tested packagings were:

E (Tq): not treated slice onto small basin without packing;

F (MAP): packaging in protective atmosphere (80% $O_2$; 20%$CO_2$);

G (MAP+ ads): packaging in protective atmosphere (80% $O_2$; 20%$CO_2$) with adsorbent 4 (70% cellulose, 25% zeolites, 5% starch);

H (ADS): packaging with adsorbent 4 (70% cellulose, 25% zeolites, 5% starch).

Additional experimentations were carried out by using the same search approach, but with adsorbents with different composition, in particular with: adsorbent 5 (60% cellulose, 25% zeolites, 15% starch), adsorbent 9 (65% cellulose, 15% zeolites, 20% starch %), adsorbent 1 (70% cellulose, 20% zeolites, 10% starch), adsorbent 2 (65% cellulose, 25% zeolites, 10% starch) and adsorbent 5bis (60% cellulose, 25% zeolites, 14.9% starch, 0.1% kaolin). The results obtained for all the compositions described above confirm what reported hereinafter.

The preservation tests were carried out at the temperature of 5°C for a period equal to 8 days. The efficiency of the methods investigated in this study was checked by opening twice, in particular after 3 and 8 days. On each opening day 6 small basins belonging to each investigated group samples were checked, 3 thereof were used for the microbiological analyses and 3 for the pH and colour analyses.

Analytical methods

The pH is measured upon each opening of the packagings with Crison Basic C 20 pHmeter with electrode for solids.

The colour is measured by means of CR300 Chromameter colourimeter (Minolta, Japan) with 10-mm opening. The results expressed according to the C.I.E. measurement system (1976) L*a*b*, with: L* (index of brightness or light quantity); a* (index of red, it expresses the read colour if positive and green if negative); b* (index of yellow, it expresses the yellow colour if positive and blue if negative. Moreover the parameter Hue (H* or arctg (b*/a*) is evaluated).

The taken product, weighing between 30 and 40 gr, was diluted in ratio 1:3 with sterile physiological solution and homogenized with Stomacher for 30 seconds.

Searched microorganisms and cultural substrates;

Aerobic phychrophylic bacteria: Tryptone soya agar (Oxoid), at 10°C for 7 days; surface seeding.

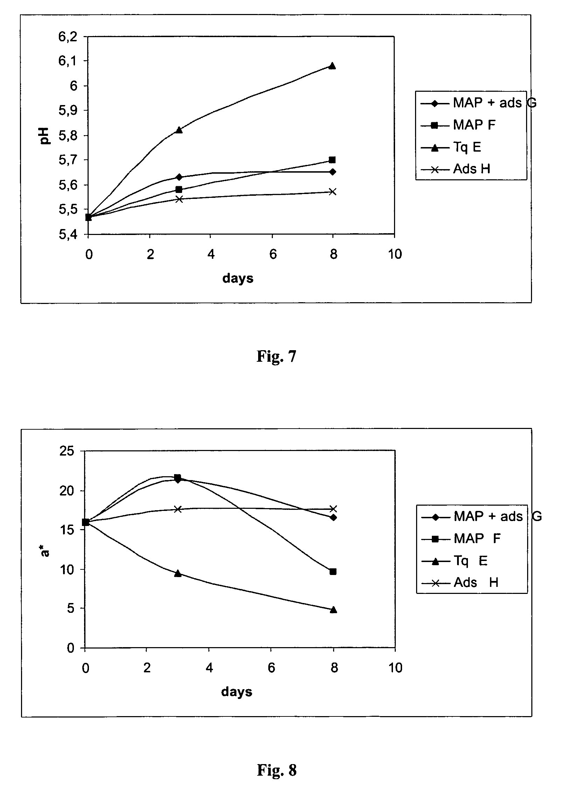

The pH is a freshness evaluation index, since the increase thereof is caused by the accumulation of basic substances such as mercaptan, indole, scatol, amines, etc. The acceptability limit of such index is about 6.0-6.2 threat a dark colouring, a less capability in the water retention of the food product and the development of compounds such as hydrogen sulfide, acetic acid, isobutyric and isovaleric acid, due to the growth of negative Gram bacteria, are noted. The pH increase (figure 7) was noted for all the theories, but to the less extent for the samples F, G and H, reaching the value of about 5.6, on the 8th preservation day, unlike the sample as such which reaches on the same day a pH value equal to 6.25.

The colorimetric analysis was very important since it allowed monitoring the colour variations, the sensorial parameter most critical for the correct preservation of a meat product such as buffalo meat. The parameters investigated for evaluating the phenomenon were index of red a* and Hue angle, which accounts for the respective contribution between the yellow and red component.

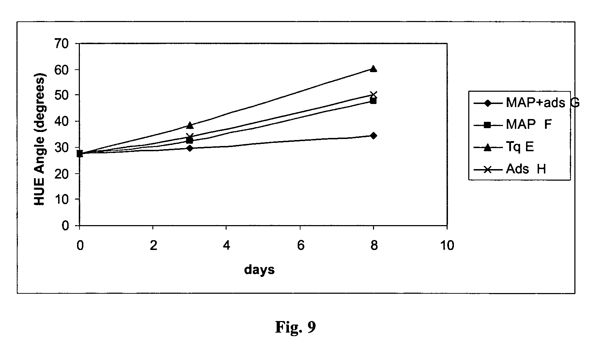

During the preservation and for the samples F and G, for which a partial increase in the a* parameter (figure 8) was noted, due to the oxymyoglobin formation which forms due to the high oxygen percentage existing in the used protective atmosphere. Upon proceeding with the preservation, the red index progressively decreases due to the passage from oxymyoglobin to metamyoglobin due to the residue methabolism of the tissues and to the development of the microorganisms. In the sample H with the adsorbent alone, there is the persistence of the red colour during the whole preservation period until the end of the experimentation unlike the samples packed with protective atmosphere for which a decrease in the a* parameter after 8 preservation days was noted. Similar behaviour was noted also for the Hue angle, shown in figure 9, having an increasing variation during preservation related to the fact that the yellow colouring increases with respect to the red one which tends to decrease. The lowest values were noted for the G samples and with the adsorbent alone to confirm that at the end of the preservation the predominant tone is red.

From the results of the microbiological analyses (Table 3) it can be noted that the total psychrotrophic charge variation does not show significative differences between the samples packed in protective atmosphere with and without adsorbent, which confirms the bacteriostatic effect of the high oxygen and carbon dioxide concentration in limiting the uncontrolled development of the deteriorating bacterial flora. In case of the sample with the adsorbent alone (G) the total psychrotrophic charge maintains at low levels and this demonstrates the effect of the adsorbent itself in slowing down the development of the microbic charge. This slowing down, in fact, was not observed for the sample as such (E) which, starting from the third preservation day, has a microbic concentration at the lower limit of the product acceptability.

Table 3:

| Packaging efficiency on the microbic growth during preservation; the E, F, G and H symbols refer to the used packaging typologies. | | | | |
|---|---|---|---|---|
| Time gg | Total psychrophylic charge (UFC/g) | | | |
| | As such E | MAP+ ads G | MAP F | ADS H |
| 0 | 1.19E+03 | 1.19E+03 | 1.19E+03 | 1.19E+0 3 |
| 3 | 3.4E+06 | 3.26E+03 | 3.98E+0.3 | 3.0E+04 |
| 8 | 1.70E+09 | 4.79E04 | 7.08E+04 | 2.5E+05 |

## Claims

1. Adsorbent product for lengthening the *shelf life* of packed food products, obtainable from the process comprising the following steps

   a. preparing a mixture of cellulose, zeolites and starch;
   b. mixing said mixture with water until obtaining a dough and
   c. drying and forming of said dough.

2. Adsorbent according to claim 1, wherein in said mixture said cellulose is present in a quantity of 40-85%, said zeolites in a quantity of 2-30% and said starch in a quantity from 0.1% to the quantity complementary to 100%, said quantities being expressed as weight quantities with reference to the total weight of said mixture.

3. Adsorbent according to at least one of the preceding claims, wherein said cellulose is present as mixture of cellulose with long fibres and microcrystalline cellulose in ratio from 70 to 30% until 50 to 50%, preferably 60 to 40%.

4. Adsorbent according to at least one of the preceding claims, wherein said zeolites are present under the form of mixture of zeolite 3 A and 4 A, in ratio between 80 and 20% and 60 and 40%, preferably between 70 and 30%.

5. Adsorbent according to at least one of the preceding claims, wherein said starch is rice starch.

6. Adsorbent according to any of the preceding claims, wherein said drying takes place at temperatures between 60 and 80° C, preferably at 70°C.

7. Adsorbent according to at least one of the preceding claims, wherein in said step b) said mixture is mixed with water in ratio of 1 part of mixture by 1.5-2.5 parts of water, preferably 1 part of mixture by 2 parts of water.

8. Adsorbent according to at least one of the preceding claims, wherein to said mixture in step a) kaolin and/or gums are added in a quantity of 0.2-0.3% in weight with reference to the weight of said mixture.

9. Adsorbent according to any of the preceding claims, wherein said cellulose is present in a quantity of 40-70% and said zeolites in a quantity of 10-30% to lengthen the shelf life of packed fresh vegetables.

10. Adsorbent according to at least one of the claims 1 to 8, wherein said cellulose is present in a quantity of 60-70% and said zeolites in a quantity of 10-30% to lengthen the *shelf life* of meat and fish.

11. Adsorbent according to at least one of the claims 1 to 8, wherein said cellulose is present in a quantity of 70-85%, said zeolites in a quantity of 2-10% to lengthen the *shelf life* of oven products.

12. Packaging for lengthening the *shelf life* of food products, comprising an adsorbent as claimed in at least one of the claims 1 to 8 and a packing.

13. Packaging according to claim 12, wherein said adsorbent is present in a quantity of 0.5-5% in weight with reference to the weight of the food product.

14. Packaging according to claims 12 or 13, wherein said adsorbent is not in contact with said food product.

15. Packaging according to at least one of the claims 12 to 14 comprising an adsorbent as claimed in claim 9 and a semi-permeable packing.

16. Packaging according to at least one of the claims 12 to 14 comprising an adsorbent as claimed in claims 10 or 11 and a barrier packing.

17. Packaging according to claim 16, containing a protective atmosphere.

18. A process for producing an adsorbent for lengthening the *shelf life* of packed food products, comprising the following steps

    a. preparing a mixture of cellulose, zeolites and starch
    b. mixing of said mixture with water until obtaining a dough
    c. drying and formation of said dough.

19. The process according to claim 18, wherein in said mixture said cellulose is present in a quantity of 40-85%, said zeolites in a quantity of 2-30% and said starch in a quantity from 0.1% to the quantity complementary to 100%, said quantities being expressed as weight quantities with reference to the total weight of said mixture.

20. The process according to at least one of the claims 18 or 19, wherein said cellulose is present as mixture of cellulose with long fibres and microcrystalline cellulose in a ratio from 70 to 30% until 50 to 50%, preferably 60 to 40%.

21. The process according to at least one of the claims 18 to 20, wherein said zeolites are present under the form of a mixture of zeolite 3A and 4A, in a ratio between 80 and 20% and 60 and 40%, preferably between 70 and 30%.

22. The process according to at least one of the claims 18 to 21, wherein said starch is rice starch.

23. The process according to at least one of the claims 18 to 22, wherein said drying takes place at temperatures between 60 and 80° C, preferably at 70°C.

24. The process according to at least one of the claims 18 to 23, wherein in said step b) said mixture is mixed with a water quantity in a ratio of 1 part of mixture by 1.5- 2.5 parts of water, preferably 1 part of mixture by 2 parts of water.

25. The process according to any of the claims 18 to 24, wherein to said mixture in step a) kaolin and/or gums are added, in a quantity of 0.2-0.3% in weight with reference to the weight of said mixture.

26. Use of the adsorbent as claimed in claims 1 to 9, for lengthening the shelf life of food products.

**Fig. 1**

**Fig. 2**

**Fig. 3**

**Fig. 4**

**Fig. 5**

**Fig. 6**

**Fig. 7**

**Fig. 8**

**Fig. 9**